# FASCICULE DE BREVET EUROPEEN

(11) **EP 0 298 785 B1**
(45) Date de publication et mention de la délivrance du brevet: **07.01.1993**
(21) Numéro de dépôt: 88401270.9
(22) Date de dépôt: 25.05.1988
(51) Int. Cl.: G02C 7/04

(54) **Lentille de contact asphérique pour correction de la presbytie**
Asphärische Kontaktlinse für die Korrektur der Presbyopia
Aspheric contact lens for correction of presbyopia

(30) Priorité: 01.06.1987 FR 8707627
(43) Date de publication de la demande: 11.01.1989
(73) Titulaire: ESSILOR INTERNATIONAL Compagnie Générale d'Optique, F-94028 Créteil Cédex (FR)
(72) Inventeur: Mercier, Jean-Louis, F-91640 Fontenay les Briis (FR)
(74) Mandataire: CABINET BONNET-THIRION

(56) Documents cités:
- EP-A- 0 184 490
- CA-A- 986 343
- FR-A- 2 340 560
- FR-A- 2 582 416
- GB-A- 2 033 101
- GB-A- 2 139 375
- "Imagerie Géométrique-Aberrations", A. Marechal, pp 99-107
- "Dictionaire de Physique", Matieu, Kastler et Fleury, p 56

## Description

La présente invention concerne d'une manière générale les lentilles de contact propres à une correction de presbytie, c'est-à-dire les lentilles de contact propres à compenser un défaut d'accommodation du cristallin.

Ainsi qu'on le sait, une telle lentille de contact doit être en mesure de permettre aussi bien une vision de loin qu'une vision de près.

La présente invention vise plus particulièrement le cas où, dans la partie utile de la lentille, c'est-à-dire dans sa partie centrale, celle-ci ayant un diamètre sensiblement égal à celui de la pupille de l'oeil, ces deux visions sont dites "simultanées".

En pratique, lorsque, comme cela est le cas le plus fréquent, une telle lentille de contact est une lentille bifocale comportant deux zones concentriques, l'une pour la vision de loin, l'autre pour la vision de près, seuls les rayons passant par la zone concernée participent à l'image utile de l'objet observé.

Il en est de même lorsqu'il s'agit d'une lentille de contact progressive, c'est-à-dire une lentille de contact dont l'une au moins des faces est, au moins dans sa partie utile, formée d'une surface asphérique, son autre face étant en pratique usuellement formée, au moins dans sa partie utile, d'une surface sphérique.

L'un des avantages des lentilles de contact à visions dites simultanées tient à ce qu'elles doivent être peu mobiles sur l'oeil.

Il est en effet plus aisé de limiter la mobilité d'une lentille de contact que de la contrôler parfaitement dans une plage de déplacement définie.

Ainsi se trouvent minimisées les difficultés usuellement dues par ailleurs à une telle mobilité, qui, autrement, doit être bien contrôlée, alors même qu'elle varie d'un individu à un autre.

Mais, à ce jour, les lentilles de contact à visions dites simultanées sont elles-mêmes à l'origine de difficultés, qui ne permettent pas d'atteindre un taux important de satisfaction de la part des patients qui les portent.

La raison essentielle en est qu'on observe fréquemment, avec elles, une baisse globale d'acuité, en particulier en vision de près, lorsque les conditions d'éclairement ambiant sont insuffisantes, cette baisse d'acuité pouvant en outre s'accompagner d'un affaiblissement des contrastes et/ou de l'apparition de reflets parasites.

Il faut rappeler à ce sujet que, lorsque le niveau d'éclairement baisse, la pupille de l'oeil se dilate et que lorsque l'oeil accommode, ou converge, ce qui est le cas pour une vision de près, son diamètre au contraire diminue.

Les effets conjugués de ces deux phénomènes opposés, qui interviennent à tout âge, mais qui peuvent varier d'un individu à un autre, font que les lentilles bifocales de type concentrique, notamment, sont mal adaptées à donner en permanence, c'est-à-dire dans toute condition, une acuité suffisante, et, par suite, une vision correcte, notamment en vision de près, du fait que leurs zones optiques de vision de loin et de vision de près ont, elles, des étendues bien déterminées et bien séparées.

Mais des problèmes de même type se retrouvent également, à ce jour, avec les lentilles de contact progressives comportant une surface asphérique.

C'est le cas, par exemple, pour la lentille de contact qui, décrite dans la demande de brevet européen No 184.490, comporte une surface asphérique présentant axialement un point singulier.

Les essais qui ont pu être faits avec une telle lentille de contact conduisent en effet à un taux de satisfaction des porteurs qui, inférieur à 33 %, est nettement insuffisant.

La présente invention a d'une manière générale pour objet une lentille de contact à visions dites simultanées susceptible, au contraire, de permettre l'obtention de taux de satisfaction satisfaisants.

Elle est fondée sur le fait qu'en présence d'aberration sphérique dans l'objet optique qu'on lui présente, le système visuel humain constitué de l'oeil et de la lentille de contact qui lui est appliquée place spontanément son plan d'analyse image sur la pointe de la caustique de la surface d'onde correspondante.

Elle est également fondée sur le fait que, à partir d'une caustique donnée, il est possible, par mise en oeuvre d'un programme de calcul approprié et application d'un mode d'optimisation souhaité de la caustique, de remonter, par le calcul, à l'expression polynomiale de la surface asphérique correspondante.

L'invention propose une lentille de contact dite à vision simultanée avec deux puissances distinctes déterminées, correspondant à des visions de près et de loin, dont l'une quelconque des faces est, au moins dans sa partie utile, formée d'une surface sphérique tandis que l'autre est, au moins dans sa partie utile, formée d'une surface asphérique, caractérisée en ce que, le profil de la face asphérique étant calculé à partir d'une forme choisie de caustique de la surface d'onde émergeant de cette lentille, cette caustique est constituée de deux nappes respectivement issues de rayons paraxiaux et marginaux, la nappe issue de rayons paraxiaux étant constituée de deux surfaces de révolution autour de l'axe principal de lentille, dont l'une est réduite à l'axe, et qui se raccordent en un point de rebroussement formant pointe dite par commodité paraxiale, tandis que l'autre nappe issue de rayons marginaux, est constituée de deux surfaces de révolution qui se raccordent en un point de rebroussement sur l'axe, formant pointe qui sera dite par commodité marginale.

L'expérience montre, en effet, et il s'agit là d'une découverte à l'origine de l'invention, qu'en donnant ainsi à l'aberration sphérique du système optique visuel humain constitué de l'oeil et de la lentille de contact qui lui est appliquée la propriété particulière que constitue la présence de deux pointes pour la caustique correspondante, il est avantageusement possible de résoudre de manière satisfaisante les problèmes usuellement rencontrés avec les lentilles de contact à visions dites simultanées connues à ce jour.

En particulier, cette lentille de contact permet, aussi bien pour un objet placé à distance finie que pour un objet placé à distance infinie, de prendre en compte des rayons lumineux qui, dans les lentilles de contact bifocales à zone de vision de près et zone de vision de loin concentriques, ne participent au contraire pas à la formation de l'image utile d'un tel objet perçue par le patient.

Il est ainsi avantageusement possible de s'affranchir suffisamment des variations de diamètre pupillaire de ce patient.

Les caractérisitiques et avantages de l'invention ressortiront d'ailleurs de la description qui va suivre, à titre d'exemple, en référence aux dessins schématiques annexés sur lesquels :
la figure 1 est une vue en coupe axiale d'une lentille de contact suivant l'invention ;
la figure 2 est une représentation de la caustique de sa surface d'onde ;
la figure 3 est une représentation de deux caustiques de cette lentille de contact, l'une correspondant à un objet situé à distance infinie, l'autre correspondant à un objet situé à distance finie ;
la figure 4A est une représentation des images, dans le plan d'analyse de l'oeil équipé d'une telle lentille de contact, d'un point situé à distance infinie ;
la figure 4B est une représentation analogue à celle de la figure 4A, pour un point situé à distance finie ;
les figures 5, 6, 7 8A et 8B sont respectivement analogues aux figures 1, 2, 3, 4A et 4B, pour une autre lentille de contact suivant l'invention.

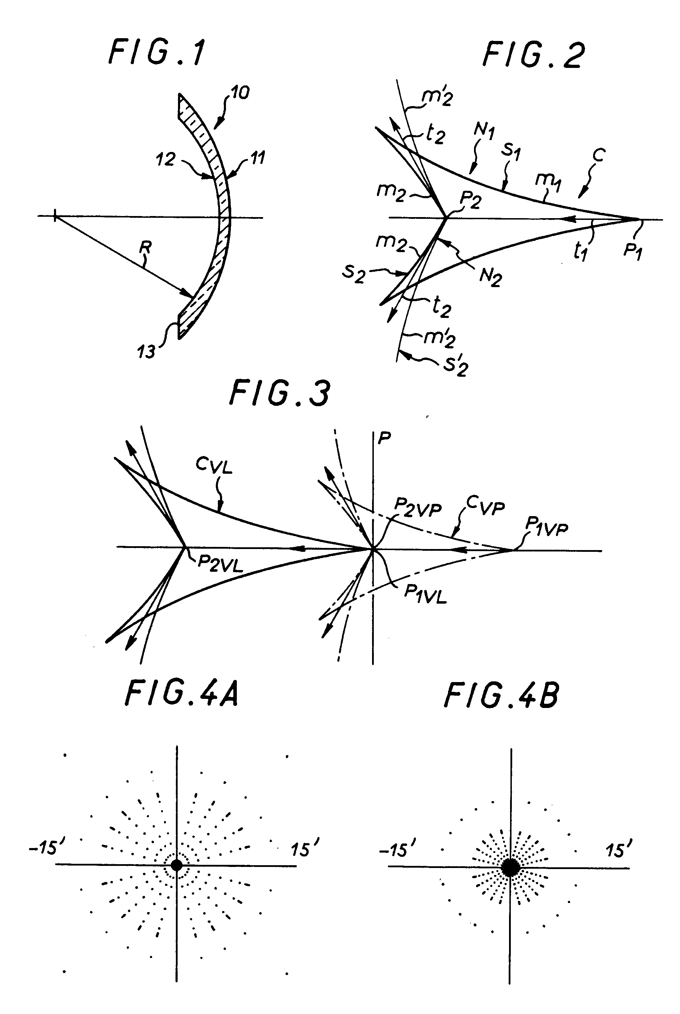

Tel qu'illustré, par exemple, sur la figure 1, et de manière connue en soi, une lentille de contact 10 suivant l'invention comporte, d'une manière générale, une face avant 11 convexe, et une face arrière 12 concave, avec, éventuellement, et tel que représenté, à la périphérie de ces faces, une zone de raccordement 13 formée d'une ou plusieurs facettes annulaires concentriques les reliant l'une à l'autre.

De manière également connue en soi, l'une quelconque des faces de cette lentille de contact 10, et il s'agit en pratique de sa face arrière 12 dans la forme de réalisation représentée, est, au moins dans sa partie utile, formée d'une surface sphérique, de rayon R, tandis que l'autre, et il s'agit donc, dans cette forme de réalisation, de sa face avant 11, est, au moins dans sa partie utile, formée d'une surface asphérique.

Suivant l'invention, et tel qu'illustré à la figure 2, la caustique C de la surface d'onde qui émerge de la lentille de contact 10 suivant l'invention comporte deux pointes P₁, P₂, l'une paraxiale, l'autre marginale.

Ainsi qu'on le sait, la caustique d'un système optique est l'enveloppe des rayons lumineux l'ayant traversé.

En l'espèce, la caustique C de la lentille de contact 10 suivant l'ivention est formée de deux nappes N₁, N₂ auxquelles appartiennent, chacune respectivement, les deux pointes P₁, P₂.

En pratique, les pointes P₁, P₂ forment chacune respectivement des points de rebroussement pour les nappes N₁, N₂ et elles appartiennent l'une et l'autre à l'axe de l'ensemble.

En pratique, également, et tel que détaillé sur la figure 2, la nappe N₁ est formée d'une surface unique S₁, de méridien m₁ tangent en P₁ à l'axe de l'ensemble, suivant la tangente t₁, tandis que la nappe N₂ est formée de deux surfaces S₂, S′₂, dont les méridiens m₂, m′₂ ont en P₂ une même tangente t₂ oblique sur ledit axe, en s'écartant chacun respectivement de part et d'autre de cette tangente t₂ à compter de ce dernier.

Autrement dit, pour la pointe P₁, la tangente t₁ au méridien m₁ de la surface S₁ constituant la nappe N₁ est confondue avec l'axe de l'ensemble, et pour la pointe P₂, la tangente t₂ aux méridiens m₂, m′₂ des surfaces S₂, S′₂ constituant les deux branches que présente la nappe N₂ est inclinée sur cet axe.

Ainsi qu'on le notera, ces pointes P₁, P₂ sont axialement dirigées l'une et l'autre dans le même sens.

En pratique, la distance entre ces pointes P₁, P₂ est directement liée à l'addition de puissance souhaitée pour la lentille.

Quoi qu'il en soit, avec une caustique C ainsi constituée, il est possible, en prenant en compte les paramètres d'optimisation à respecter par ailleurs et choisis au gré des résultats recherchés, de déterminer par le calcul l'expression polynômiale à laquelle doit répondre la surface asphérique que comporte, sur sa face avant convexe 11 dans la forme de réalisation représentée, la lentille de contact 10 à réaliser.

De préférence, et tel qu'illustré à la figure 3, il est fait en sorte que, dans un plan d'analyse P choisi pour correspondre en pratique au ponctum remotum d'un individu, la pointe paraxiale P_{1VL} de la caustique C_{VL} de la surface d'onde image d'un point situé à distance infinie soit confondue avec la pointe marginale P_{2VP} de la caustique C_{VP} de la surface d'onde image d'un pbjet situé à distance finie, c'est-à-dire à une distance finie choisie, directement liée à l'addition de puissance correspondante.

Sur la figure 3, la caustique C_{VL} a été représentée en trait plein et la caustique C_{VP} en traits interrompus.

Ainsi qu'on le sait, une pointe de caustique correspond à une concentration maximale de lumière, et l'oeil, en face d'une aberration, s'autofocalise préférentiellement sur une telle concentration maximale de lumière.

Le pouvoir séparateur de l'oeil étant en moyenne de 1′30, il suffit que les taches images de deux objets soient séparées l'une de l'autre d'un angle supérieur pour être convenablement distinguées, et donc pour disposer globalement d'une image nette de ces objets.

En plaçant dans un même plan d'analyse deux pointes de caustique dont l'une correspond à une vision de près et l'autre à une vision de loin, les images reçues restent avantageusement suffisamment nettes pour être correctement observées.

Les figures 4A, 4B illustrent ce résultat, avec, pour coordonnées, des minutes d'angle.

La figure 4A donne les images reçues pour un point situé à distance infinie.

La figure 4B donne celles reçues pour un point situé à 500 mm.

On notera, dans l'un et l'autre cas, la grande concentration de lumière dans la zone centrale, cette concentration de lumière s'y trouvant matérialisée par une tache noire relativement peu étendue.

Avec le premier exemple de réalisation illustré sur la figure 1, la lentille de contact 10 suivant l'invention a, sur sa face avant 11, une surface asphérique dont le rayon de courbure est plus grand au centre qu'à la périphérie.

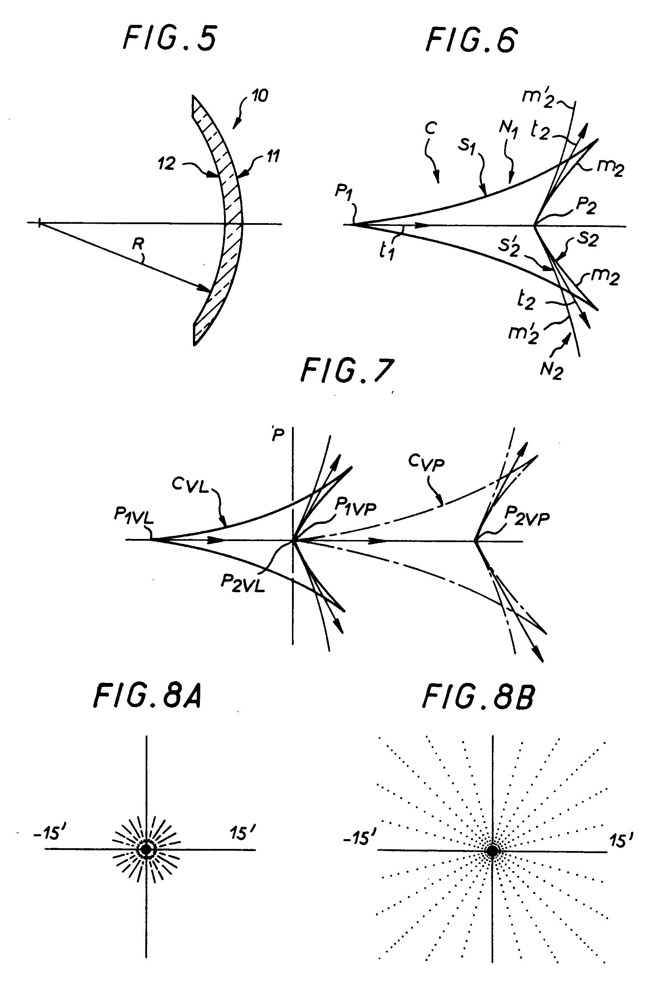

En variante, la figure 5 se rapporte, à titre de deuxième exemple, à une lentille de contact 10 pour laquelle la surface asphérique de la face avant 11 a, au contraire, un rayon de courbure plus petit au centre qu'à la périphérie.

Dans ce cas, la caustique C a, axialement, une orientation générale globalement inverse de la précédente.

Mais, comme précédemment, elle a, axialement, deux pointes P₁, P₂, l'une paraxiale, l'autre marginale, l'une et l'autre axialement dirigées dans le même sens.

Préférentiellement, et tel qu'illustré par la figure 7, il est alors fait en sorte que la pointe paraxiale P_{1VP} de la caustique C_{VP} de la surface d'onde image d'un objet situé à distance finie soit confondue avec la pointe marginale P_{2VL} de la caustique C_{VL} de la surface d'onde image d'un objet situé à distance infinie.

Comme précédemment, également, les figures 8A, 8B donnent les allures des images reçues pour un point situé, respectivement, à distance infinie et à 500 mm.

A titre d'illustration, on donnera ci-après des valeurs numériques pour l'un et l'autre de ces deux exemples.

### EXEMPLE 1

- Puissance en vision de loin :: - 7.00 )
( soit addition: 2.00
- Puissance en vision de près :: - 5.00 )
- Diamètre utile de la surface asphérique :: 4 mm
- Rayon au centre de la face avant convexe asphérique au centre de celle-ci :: 9,0274 mm = R
- Rayon de la face arrière concave sphérique :: 8 mm
- Indice :: 1,38
- Epaisseur au centre :: 0,2 mm

Equation de la face avant 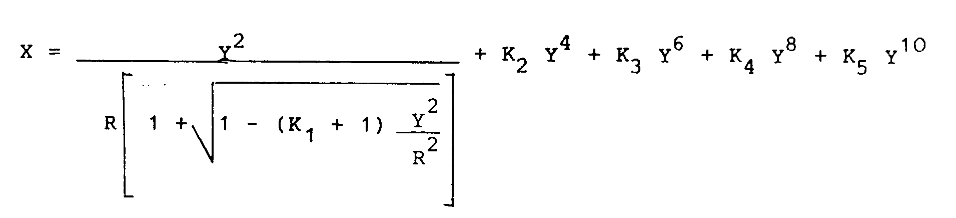
avec
- K₁ =: - 1,49421
- K₂ =: - 0,193.10⁻²
- K₃ =: 0,499.10⁻²
- K₄ =: - 0,254.10⁻²
- K₅ =: 0,415.10⁻³

### EXEMPLE 2

- Puissance en vision de loin :: + 4.00 (
( soit addition: 1.50
- Puissance en vision de près :: + 5.50 (
- Diamètre utile de la surface :: 6 mm
- Rayon au centre de la face avant convexe asphérique au centre de celle-ci :: 7,7579 mm = R
- Rayon de la face arrière concave sphérique :: 8,6 mm
- Indice :: 1,44
- Epaisseur :: 0,15 mm

Equation de la face avant 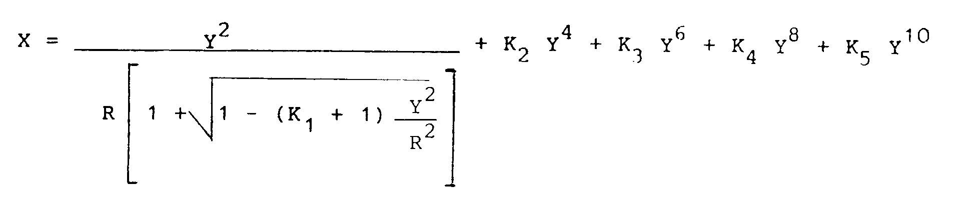
avec
- K₁ =: - 1
- K₂ =: - 0,1135.10⁻³
- K₃ =: 0,1501.10⁻⁵
- K₄ =: - 0,4215.10⁻⁵
- K₅ =: 0,2501.10⁻⁶

Bien entendu, la présente invention ne se trouve en rien limitée par ces valeurs numériques.

D'une manière plus générale, elle n'est pas limitée aux formes de réalisation décrites et représentées.

En particulier, la surface asphérique que comporte une lentille de contact suivant l'invention peut aussi hien appartenir à sa face arrière concave qu'à sa face avant convexe.

Dans tous les cas, le diamètre de la partie utile de cette surface asphérique est préférentiellement au moins égale à 4 mm.

Dans tous les cas, également, les surfaces en cause sont de révolution.

Enfin, si, dans ce qui précède, et, notamment dans les exemples plus spécifiquement décrits, la géométrie de la surface asphérique des lentilles de contact concernées est déterminée par un développement polynomial, il va de soi qu'il peut également être utilisé une fonction pistolet (spline).

## Revendications

1. Lentille de contact dite à vision simultanée avec deux puissances distinctes déterminées, correspondant à des visions de près et de loin, dont l'une quelconque des faces (11, 12) est, au moins dans sa partie utile, formée d'une surface sphérique tandis que l'autre est, au moins dans sa partie utile, formée d'une surface asphérique, caractérisée en ce que, le profil de la face asphérique étant calculé à partir d'une forme choisie de caustique (C) de la surface d'onde émergeant de cette lentille (10), cette caustique (C) est constituée de deux nappes (N₁, N₂) respectivement issues de rayons paraxiaux et marginaux, la nappe (N₁) issue de rayons paraxiaux étant constituée de deux surfaces de révolution (S₁, t₁) autour de l'axe principal de lentille (10), dont l'une (t₁) est réduite à l'axe, et qui se raccordent en un point de rebroussement (P₁) formant pointe dite par commodité paraxiale, tandis que l'autre nappe (N₂) issue de rayons marginaux, est constituée de deux surfaces de révolution (S₂, S'₂) qui se raccordent en un point de rebroussement (P₂) sur l'axe, formant pointe (P₂) qui sera dite par commodité marginale.

2. Lentille de contact selon la revendication 1, caractérisée en ce que les pointes (P₁, P₂) de ladite caustique (C) sont l'une et l'autre dirigées dans le même sens sur l'axe.

3. Lentille de contact selon l'une des revendications 1 et 2, caractérisée en ce que la distance entre les deux pointes (P₁, P₂) est directement liée à l'addition des deux puissances de la lentille (10).

4. Lentille de contact selon une quelconque des revendications 1 à 3, caractérisée en ce que, dans la nappe (N₁) issue des rayons paraxiaux, la surface de révolution (S₁) non réduite à l'axe présente un méridien (m₁) tangent à cet axe au point de rebroussement (P₁), tandis que, dans la nappe (N₂) issue de rayons marginaux, les surfaces de révolution (S₂, S'₂) présentent des méridiens (m₂, m'₂) qui ont même tangente (t₂) au point de rebroussement (P₂), oblique sur ledit axe principal.

5. Lentille de contact selon une quelconque des revendications 1 à 4, caractérisée en ce que la pointe paraxiale (P_{1VL}) de la caustique (C_{VL}) de la surface d'onde image d'un objet situé à distance infinie est confondue avec la pointe marginale (P_{2VP}) de la caustique (C_{VP}) de la surface d'onde image d'un objet situé à distance finie.

6. Lentille de contact selon une quelconque des revendications 1 à 4, caractérisée en ce que la pointe paraxiale (P_{1VP}) de la caustique (C_{VP}) de la surface d'onde image d'un objet situé à distance finie est confondue avec la pointe marginale (P_{2VL}) de la caustique (C_{VL}) de la surface d'onde image d'un objet situé à distance infinie.

7. Lentille de contact selon une quelconque des revendications 1 à 6, caractérisée en ce que la surface asphérique appartient à sa face avant convexe (11).

8. Lentille de contact selon une quelconque des revendications 1 à 6, caractérisée en ce que la surface asphérique appartient à sa face arrière concave (12).

9. Lentille de contact selon une quelconque des revendications 1 à 8, caractérisée en ce que le diamètre de la partie utile de sa surface asphérique est au moins égal à 4 mm.

10. Lentille de contact selon une quelconque des revendications 1 à 9, caractérisée en ce que les surfaces en cause sont de révolution.

## Claims

1. A contact lens referred to as a simultaneous vision contact lens with two separate given powers corresponding to close and far vision, either one of the faces (11, 12) of which is formed at least in its useful part by a spherical surface while the other is formed at least in its useful part by an aspherical surface, characterised in that, the profile of the aspherical face being calculated from a selected shape of caustic (C) of the wave surface emerging from said lens (10), said caustic (C) is formed by two nappes (N₁, N₂) respectively produced by paraxial and marginal rays, the nappe (N₁) produced by paraxial rays being formed by two surfaces of revolution (S₁, t₁) around the main axis of the lens (10), of which one (t₁) is reduced to the axis, and which are connected at a cusp point (P₁) forming a point which for convenience is referred to as the paraxial point, while the other nappe (N₂) produced by marginal rays is formed by two surfaces of revolution (S₂, S'₂) which are connected at a cusp point (P₂) on the axis, forming a point (P₂) which will be referred to for convenience as the marginal point.

2. A contact lens according to claim 1 characterised in that the points (P₁, P₂) of said caustic (C) are both directed in the same direction on the axis.

3. A contact lens according to one of claims 1 and 2 characterised in that the distance between the two points (P₁, P₂) is directly linked to the addition of the two powers of the lens (10).

4. A contact lens according to any one of claims 1 to 3 characterised in that, in the nappe (N₁) produced by the paraxial rays, the surface of revolution (S₁) which is not reduced to the axis has a meridian (m₁) tangential to that axis at the cusp point (P₁) while, in the nappe (N₂) produced by marginal rays, the surfaces of revolution (S₂, S'₂) have meridians (m₂, m'₂) which have the same tangent (t₂) to the cusp point (P₂), which is oblique to said main axis.

5. A contact lens according to any one of claims 1 to 4 characterised in that the paraxial point (P_{1VL}) of the caustic (C_{VL}) of the wave surface which is the image of an object disposed at an infinite distance is coincident with the marginal point (P_{2VP}) of the caustic (C_{VP}) of the wave surface which is the image of an object disposed at a finite distance.

6. A contact lens according to any one of claims 1 to 4 characterised in that the paraxial point (P_{1VP}) of the caustic (C_{VP}) of the wave surface which is the image of an object disposed at a finite distance is coincident with the marginal point (P_{2VL}) of the caustic (C_{VL}) of the wave surface which is the image of an object disposed at an infinite distance.

7. A contact lens according to any one of claims 1 to 6 characterised in that the aspherical surface belongs to its convex front face (11).

8. A contact lens according to any one of claims 1 to 6 characterised in that the aspherical surface belongs to its concave rear face (12).

9. A contact lens according to any one of claims 1 to 8 characterised in that the diameter of the useful part of its aspherical surface is at least equal to 4 mm.

10. A contact lens according to any one of claims 1 to 9 characterised in that the surfaces in question are surfaces of revolution.

## Patentansprüche

1. Kontaktlinse zur Simultanvision mit zwei bestimmten unterschiedlichen Stärken, entsprechend einer Fernsicht und einer Nahsicht, deren eine Fläche (11, 12) wenigstens in ihrem nutzbaren Abschnitt durch eine sphärische Oberfläche gebildet ist, während die andere wenigstens in ihrem nutzbaren Abschnitt durch eine asphärische Oberfläche gebildet ist, dadurch gekennzeichnet, daß das Profil der asphärischen Fläche berechnet ist ausgehend von einer gewählten Brennflächenform (C) der Wellenoberfläche, die von der Linse (10) austritt, wobei die Brennfläche (C) von zwei Schalen (N₁, N₂) gebildet wird, die jeweils von paraxialen und randständigen Strahlen abgeleitet sind, wobei die Schale (N₁), die von paraxialen Strahlen abgeleitet ist, von zwei Umdrehungsflächen (S₁, t₁) um die Hauptachse der Linse (11) gebildet ist, deren eine (t₁) auf der Achse reduziert ist, und die sich verbinden in einem Umkehrpunkt (P₁), der die aus Bequemlichkeit paraxial genannte Spitze bildet, während die andere Schale (N₂), die von Randstrahlen abgeleitet ist, gebildet wird von zwei Umdrehungsflächen (S₂, S'₂), die sich in einem Umkehrpunkt (P₂) auf der Achse verbinden, der eine Spitze (P₂) bildet, die aus Bequemlichkeit Randspitze genannt wird.

2. Kontaktlinse nach Anspruch 1, dadurch gekennzeichnet, daß die Spitzen (P₁, P₂) der Brennfläche beide in derselben Richtung auf der Achse gerichtet sind.

3. Kontaktlinse nach einem der Ansprüche 1 und 2, dadurch gekennzeichnet, daß der Abstand zwischen den zwei Spitzen (P₁, P₂) direkt gekoppelt ist mit der Addition der beiden Stärken der Linse (10).

4. Kontaktlinse nach einem der Ansprüche 1 bis 3, dadurch gekennzeichnet, daß in der Schale (M₁), die von paraxialen Strahlen abgeleitet ist, die Umdrehungsfläche (S₁), die nicht bei der Achse reduziert ist, einen Meridian (m₁) aufweist, der diese Achse im Umkehrpunkt (P₁) berührt, während in der Schale (N₂), die von Randstrahlen abgeleitet ist, die Umdrehungsflächen (S₂, S'₂) Meridiane (m₂, m'₂) aufweisen, die dieselbe Tangente (t₂) am Umkehrpunkt (P₂) haben, die schief zur Hauptachse ist.

5. Kontaktlinse nach einem der Ansprüche 1 bis 4, dadurch gekennzeichnet, daß die paraxiale Spitze (P_{1VL}) der Brennfläche (C_{VL}) der Wellenoberfläche, die Bild eines im unendlichen Abstand angeordneten Gegenstands ist, sich trifft mit der Randspitze (P_{2VP}) der Brennfläche (C_{VP}) der Wellenoberfläche, die Bild eines in endlicher Entfernung angeordneten Gegenstands ist.

6. Kontaktlinse nach einem der Ansprüche 1 bis 4, dadurch gekennzeichnet, daß die paraxiale Spitze (P_{1VP}) der Brennfläche (C_{VP}) der Wellenoberfläche, die Bild eines im endlichen Abstand angeordneten Gegenstands ist, sich trifft mit der Randspitze (P_{2VL}) der Brennfläche (C_{VL}) der Wellenoberfläche, die Bild eines in unendlichem Abstand angeordneten Gegenstands ist.

7. Kontaktlinse nach einem der Ansprüche 1 bis 6, dadurch gekennzeichnet, daß die asphärische Oberfläche zu seiner konvexen nach vorn gerichteten Fläche (11) gehört.

8. Kontaktlinse nach einem der Ansprüche 1 bis 6, dadurch gekennzeichnet, daß die asphärische Oberfläche zu seiner konkaven nach hinten gerichteten Fläche (12) gehört.

9. Kontaktlinse nach einem der Ansprüche 1 bis 8, dadurch gekennzeichnet, daß der Durchmesser des wirksamen Abschnitts der asphärischen Oberfläche wenigstens gleich 4 mm ist.

10. Kontaktlinse nach einem der Ansprüche 1 bis 9, dadurch gekennzeichnet, daß die in Rede stehenden Oberflächen Umdrehungsflächen bzw. Umkehrflächen sind.
